# EUROPÄISCHE PATENTSCHRIFT

(11) **EP 3 298 294 B1**
(45) Veröffentlichungstag und Bekanntmachung des Hinweises auf die Patenterteilung: **01.01.2020**
(21) Anmeldenummer: 16725440.8
(22) Anmeldetag: 18.05.2016
(51) Int. Cl.: F16D 3/68, F16D 3/64, F16D 11/14, F16D 11/04, F16D 3/54, F16D 1/08

(54) **KLAUEN-KUPPLUNGSVORRICHTUNG MIT KUPPLUNGSELEMENTEN IN FKV-BAUWEISE**
DOG CLUTCH DEVICE HAVING CLUTCH ELEMENTS IN FIBER-REINFORCED PLASTIC DESIGN
DISPOSITIF D'ACCOUPLEMENT À CRABOTS POURVU D'ÉLÉMENTS D'ACCOUPLEMENT À STRUCTURE COMPOSITE RENFORCÉE PAR DES FIBRES

(30) Priorität: 21.05.2015 DE 102015108044
(43) Veröffentlichungstag der Anmeldung: 28.03.2018
(73) Patentinhaber: HORIBA Europe GmbH, 64293 Darmstadt (DE)
(72) Erfinder: SCHÜRMANN, Helmut, 67133 Maxdorf (DE); HÖRING, Barbara, 61462 Königstein (DE)
(74) Vertreter: Müller Hoffmann & Partner
(86) Internationale Anmeldenummer: PCT/EP2016/061086
(87) Internationale Veröffentlichungsnummer: WO 2016/184885

(56) Entgegenhaltungen:
- EP-A1- 1 082 217
- EP-A2- 0 534 927
- CN-U- 203 404 270
- CN-Y- 201 363 373
- DE-A1-102004 039 751
- DE-A1-102005 055 771
- DE-A1-102012 003 731
- DE-U1-202007 011 014
- US-A1- 2002 142 849

## Beschreibung

Die Erfindung betrifft eine Kupplungshälfte und eine aus zwei Kupplungshälften gebildete Kupplungsvorrichtung, insbesondere in Form einer Klauenkupplung.

Kupplungen, insbesondere formschlüssige Kupplungen wie Klauenkupplungen sind bekannt. Eine Klauenkupplung dient zur Übertragung von Drehbewegungen bzw. Drehmomenten mit Hilfe einer formschlüssigen Verbindung, die bei Bedarf trennbar sein kann. Ebenso ist es aber auch möglich, zwischen einander gegenüber liegenden Klauen zweier Kupplungshälften Elastomerelemente einzulegen, wodurch eine gewisse Relativbeweglichkeit und eine Dämpfung zwischen den Kupplungshälften erlaubt wird. Daher werden derartige Kupplungen auch als Elastomerkupplungen bezeichnet.

Klauenkupplungen können in Verbindung mit Wellen, zum Beispiel in Antriebssträngen eingesetzt werden. Ebenso finden Klauenkupplungen auch in Prüfständen Verwendung, die zum Beispiel zum Testen von Motoren oder ganzen Antriebssträngen genutzt werden. Dabei werden der Prüfling und die Belastungsmaschine, zum Beispiel ein Dynamometer, durch Wellen miteinander verbunden. Die Kopplungen der Wellen können unter anderem durch Klauenkupplungen erreicht werden. Durch diese Wellenverbindungen entstehen elastisch gekoppelte Mehrmassensysteme mit einer der Ordnung des Systems entsprechenden Anzahl von Eigenfrequenzen, die durch verschiedene Ereignisse angeregt werden können. Dies kann gerade bei einem Prüfstand zu einer Störung der Messsignale oder auch zu unrealen Belastungen des Prüflings führen.

Bei der Konzeption von Prüfständen besteht daher das Bemühen, durch die Wahl geeigneter Wellenverbindungen mit definierter Steifigkeit und mechanischer Dämpfung die Eigenfrequenzen in unkritische Betriebsbereiche zu verschieben. Die Veränderung der Eigenfrequenzen ist insbesondere durch Ändern der betroffenen Massen möglich. Daher wird es angestrebt, die Massen in den betreffenden Wellenverbindungen zu vermindern. Dies ist zwar bei den Wellen selbst durch Auswahl geeigneter Materialien möglich. Bei den Wellenanschlüssen hingegen, insbesondere bei den Kupplungen kann eine Massenverminderung nicht ohne weiteres erreicht werden.

Aus der DE 10 2011 112 708 A1 ist eine Wellenverbindung bekannt, bei der der Wellenkörper und der Anschlussflansch aus einem Faser-Verbundwerkstoff bestehen.

Aus der DE 20 2007 011 014 U1 ist ein Kupplungsteil mit einer eine Wellenaufnahme aufweisenden Nabe bekannt. Die Nabe weist über Teilungsflächen zusammensetzbare Schalensegmente auf, wobei die Teilungsflächen wenigstens zwei Bruchstellen ausbildende Bruchflächen sind.

Der Erfindung liegt die Aufgabe zugrunde, eine Kupplungsvorrichtung und eine einen Teil der Kupplungsvorrichtung bildende Kupplungshälfte anzugeben, bei denen das Gewicht gegenüber einer üblichen Kupplung, insbesondere einer Standard-Elastomerkupplung reduziert ist.

Die Aufgabe wird erfindungsgemäß gelöst durch eine Kupplungshälfte mit den Merkmalen von Anspruch 1 sowie durch eine Kupplungsvorrichtung gemäß dem nebengeordneten Anspruch.

Eine Kupplungshälfte weist mehrere Kupplungselemente auf, wobei jeweils ein Kupplungselement einen axial frei vorstehenden Klauenbereich und einen Wellenbereich aufweist, die Kupplungselemente am Umfang eines Kreises verteilt angeordnet sind, und wobei wenigstens eines der Kupplungselemente aus einem Faser-Kunststoff-Verbund (FKV) besteht.

Wenn wenigstens eines der Kupplungselemente aus einem Faser-Kunststoff-Verbund besteht, kann die Masse der Kupplungshälfte erheblich reduziert werden, wodurch sich auch die Eigenresonanzen verändern, was für den Betrieb eines Antriebsstrangs, insbesondere zum Beispiel in einem Prüfstand mit hoch empfindlichen Messgeräten, vorteilhaft ist.

Unter einem Faser-Kunststoff-Verbund (FKV) kann zum Beispiel auch ein faserverstärkter Kunststoff oder ein Faserverbund-Kunststoff verstanden werden. Dabei handelt es sich um einen Werkstoff, bestehend aus Verstärkungsfasern und einer Kunststoffmatrix. Die Matrix umgibt die Fasern, die durch Adhäsiv- oder Kohäsivkräfte an die Matrix gebunden sind. Durch die Verwendung von Faserwerkstoffen haben Faser-Kunststoff-Verbunde ein richtungsabhängiges Elastizitätsverhalten.

Als Fasern eignen sich anorganische Verstärkungsfasern, wie Glasfasern, oder insbesondere organische Verstärkungsfasern, wie Aramid-Fasern, Kohlenstoff-Fasern, Polyester-Fasern etc. FKV-Materialien sind bekannt, so dass sich an dieser Stelle eine weitere Erläuterung erübrigt.

Die maximale radiale Dicke des Klauenbereichs eines Kupplungselements kann größer als die maximale radiale Dicke des Wellenbereichs sein. Dabei wird unter der radialen Dicke die in Radialrichtung gemessene Dicke verstanden. Durch die größere radiale Dicke des Klauenbereichs ist der Klauenbereich in der Lage, Druckkräfte, die von der gegenüberliegenden Kupplungshälfte bzw. von deren Klauenbereichen ausgeübt werden, zuverlässig aufzunehmen. Zudem kann eine ausreichend große Druckfläche am Klauenbereich gebildet werden, an der sich zum Beispiel ein dazwischen eingelegtes Elastomerelement abstützen kann.

Der Wellenbereich eines Kupplungselements kann sich in Umfangsrichtung über einen größeren Winkel erstrecken als der Klauenbereich. Somit kann der Wellenbereich eine Art Ringabschnitt bilden, um den Kraftfluss zuverlässig an ein sich an den Wellenbereich anschließendes Wellenelement zu führen.

Die Wellenbereiche von zueinander am Umfang benachbarten Kupplungselementen können sich berühren. Auf diese Weise können die am Umfang eines Kreises verteilten Kupplungselemente sich gegeneinander abstützen, wenn deren Wellenbereiche sich über den Umfang gegeneinander berühren und dadurch einen geschlossenen Ring bilden.

Bei entsprechender Gestaltung tragen somit die Wellenbereiche die jeweils zugeordneten Klauenbereich, die ihrerseits an einer Seite axial frei vorstehen, also an einer anderen Seite gehalten sind.

Das aus dem Faser-Kunststoff-Verbund bestehende Kupplungselement kann aus mehreren Schichten eines Faser-Halbzeugs gebildet sein. Dabei kann die Anzahl der Schichten in dem Wellenbereich geringer oder auch gleich sein wie die Anzahl der Schichten in dem Klauenbereich.

Der Faser-Kunststoff-Verbund (FKV) kann als Halbzeug in verschiedenen Ausprägungen geliefert werden. Möglich sind zum Beispiel vorimprägnierte Materialien für Faserverbundwerkstoffe, sogenannte "Prepregs". Prepreg ist die englische Kurzform für "preimpregnated fibers", also vorimprägnierte Fasern. Prepreg-Halbzeuge sind mit Reaktionsharzen vorimprägnierte, textile Halbzeuge, die zur Herstellung von Bauteilen unter Temperatur und Druck ausgehärtet werden. Die Reaktionsharze bestehen aus einer meist hochviskosen, jedoch noch nicht polymerisierten duroplastischen Kunststoffmatrix. Die enthaltenen Fasern können als reine unidirektionale Schicht, als Gewebe oder als Gelege vorliegen. Ebenso sind auch Wirrfaser-Halbzeuge geeignet.

Prepreg wird beispielsweise bahnförmig auf Rollen gewickelt oder in einzelnen Stücken geliefert.

Die einzelnen Schichten bzw. Lagen des Faser-Halbzeugs weisen eine relativ geringe Dicke auf, so dass mehrere Schichten übereinander gelegt werden müssen, um das gewünschte Volumen, insbesondere die gewünschte Wanddicke zu erreichen. Bei der Herstellung der Kupplungshälfte können die Faser-Halbzeuge in unterschiedlichen Anzahlen von Schichten gelegt werden, so dass unterschiedliche Dicken erreicht werden können. Auf diese Weise ist es möglich, die oben schon erläuterte größere radiale Dicke im Klauenbereich zu erreichen, während die Dicke im Wellenbereich geringer sein kann, so dass dort auch eine geringere Anzahl von Schichten ausreicht.

Zwischen dem Klauenbereich und dem Wellenbereich kann ein Übergangsbereich vorgesehen sein, in dem die radiale Dicke von der radialen Dicke des Klauenbereichs zu der radialen Dicke des Wellenbereichs hin abnimmt. Die Anzahl der Schichten des Faser-Halbzeugs in dem Übergangsbereich vom Klauenbereich zum Wellenbereich kann dementsprechend auch abnehmen.

Die Abnahme der radialen Dicke kann zum Beispiel linear oder auch nach einer anderen Gesetzmäßigkeit erfolgen. Dementsprechend ist die Anzahl der Schichten mit fortlaufender Abnahme der radialen Dicke zu reduzieren. Durch geschicktes Legen der Schichten können Abstufungen erreicht werden, die einen quasi linearen Verlauf ermöglichen.

Die Schichten des Faser-Halbzeugs können derart angeordnet sein, dass die Fasern einer Schicht in einem Winkel zu den Fasern einer benachbarten Schicht stehen. Auf diese Weise können gezielt Faserwinkel erreicht werden. Die Fasern unterschiedlicher Schichten müssen also nicht parallel zueinander verlaufen, sondern können sich in einem Winkel ungleich 0° erstrecken. Dies ist insbesondere deswegen von Vorteil, weil die Fasern im Prepreg-Halbzeug meist unidirektional verlaufen, so dass durch ein Verdrehen der verschiedenen Schichten zueinander die gewünschten Faserwinkel erreicht werden. Auf diese Weise können die Fasern in einer Weise orientiert werden, um optimal die in die Kupplungshälfte bzw. die Klauenbereiche eingeleiteten Kräfte weiter zu führen. Die Kupplungshälfte und die darin verbauten Kupplungselemente können folglich sehr gezielt gestaltet werden, um anisotrope Werkstückeigenschaften zu realisieren, damit eine hohe Festigkeit bei gleichzeitig minimalem Gewicht erreicht wird.

Die Wellenbereiche der Kupplungselemente können wenigstens teilweise von einem Spannring umschlossen sein. Der Spannring kann außen axial aufgeschoben werden und einen Teil der axialen Erstreckung der Wellenbereiche überdecken.

Der Spannring dient zum Halten der Wellenbereiche an deren Außenseite und damit auch der Kupplungselemente relativ zueinander, um die Kupplungselemente in der gewünschten Stellung zu halten.

Ebenso können auch die Klauenbereiche der Kupplungselemente wenigstens teilweise von einem Stützring umschlossen sein. Auch hier kann ein Ring, nämlich der Stützring, zum Beispiel axial außen auf die Kupplungselemente aufgeschoben sein und einen Teil des Außenumfangs der Kupplungselemente umfassen.

Selbstverständlich können der Spannring und der Stützring die Wellenbereiche bzw. Klauenbereiche auch vollständig außen umschließen, also die Außenseiten vollständig abdecken.

Die Wellenbereiche können um ein Wellenelement herum angeordnet sein, wobei die Wellenbereiche mit dem Wellenelement einen Pressverband, insbesondere einen Längspressverband bilden.

Zum Beispiel können die Kupplungselemente mit ihren Wellenbereichen in den Spannring eingesetzt werden. Das Wellenelement, das hinsichtlich seines Durchmessers ein gewisses Übermaß aufweisen sollte, wird anschließend axial in die kreisförmig angeordneten Wellenbereiche eingepresst, wodurch im Zusammenwirken mit dem äußeren Spannring der Pressverband entsteht. Diese Verbindung gewährleistet auch bei dynamischen Lasten eine sichere Momentübertragung.

Auch das Wellenelement selbst kann aus FKV bestehen. Ein derartiger Aufbau ist zum Beispiel aus der DE 10 2011 112 708 A1 bekannt.

Eine erfindungsgemäße Kupplungsvorrichtung weist zwei einander gegenüberliegend und koaxial zueinander angeordnete Kupplungshälften auf, die in der oben beschriebenen Weise ausgestaltet sein können, wobei zwischen jeweils am Umfang nebeneinander liegenden Klauenbereichen von unterschiedlichen Kupplungshälften ein Elastomerelement angeordnet sein kann.

Die Kupplungsvorrichtung kann insbesondere eine Klauenkupplung bzw. in einer besonderen Ausbildung der Klauenkupplung eine Elastomerkupplung sein.

Die Fertigung einer derartigen Kupplungshälfte erfolgt als Pressteil mit anschließendem Fügen im Längspressverband. Dazu ist die Kupplungshälfte rotationssymmetrisch in die mehreren Kupplungselemente geteilt (zum Beispiel vier Kupplungselemente), so dass die einzelnen Kupplungselemente mit den Klauenbereichen kostengünstig und mit hoher Qualität im Pressverfahren hergestellt werden können.

Das Pressverfahren erfolgt unter Verwendung der genannten FKV-Halbzeuge, zum Beispiel unter Verwendung von Wirrfaser-Halbzeugen oder unidirektionalen Prepregs. Die Halbzeuge müssen vorher entsprechend der gewünschten Faserorientierung zugeschnitten werden. Die drei Bereiche mit unterschiedlichen Dicken in radialer Richtung sind - wie oben erläutert - der Wellenbereich, der Klauenbereich und der dazwischen liegende Übergangsbereich. Die Abstufung im Übergangsbereich erfolgt durch auslaufende Schichten aus dem Klauenbereich.

Diese und weitere Vorteile und Merkmale der Erfindung werden nachfolgend anhand eines Beispiels unter zu Hilfenahme der begleitenden Figuren näher erläutert. Es zeigen:
- Figur 1: eine Kupplungshälfte mit einem Wellenelement;
- Figur 2: zwei miteinander im Eingriff stehende, eine Kupplungsvorrichtung bildende Kupplungshälften;
- Figur 3: eine Innenansicht einer Kupplungshälfte mit vier Kupplungselementen in Perspektivansicht;
- Figur 4: ein Kupplungselement in Perspektivansicht;
- Figur 5: eine Schnittdarstellung des Kupplungselements von Figur 4;
- Figur 6: eine Explosionsdarstellung der Schichten des FKV-Halbzeugs bei dem Kupplungselement von Figur 4.

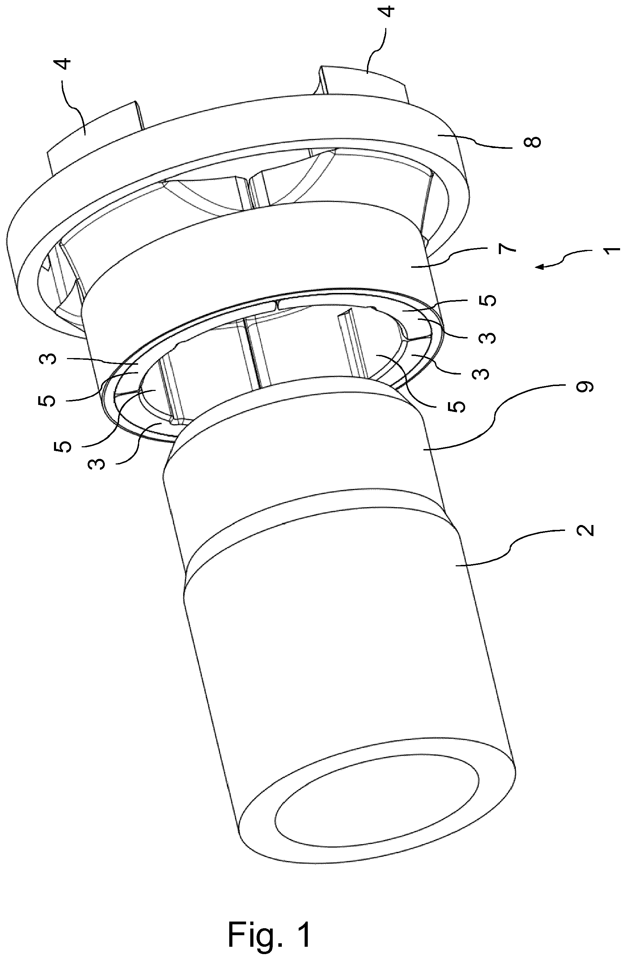

Die Figuren 1 bis 6 zeigen jeweils Teilelemente einer erfindungsgemäßen Kupplungsvorrichtung. Daher werden für gleiche Bauelemente auch gleiche Bezugszeichen verwendet.

Figur 1 zeigt eine Kupplungshälfte 1 und ein Wellenelement 2 kurz vor dem Zusammenbau mit der Kupplungshälfte 1.

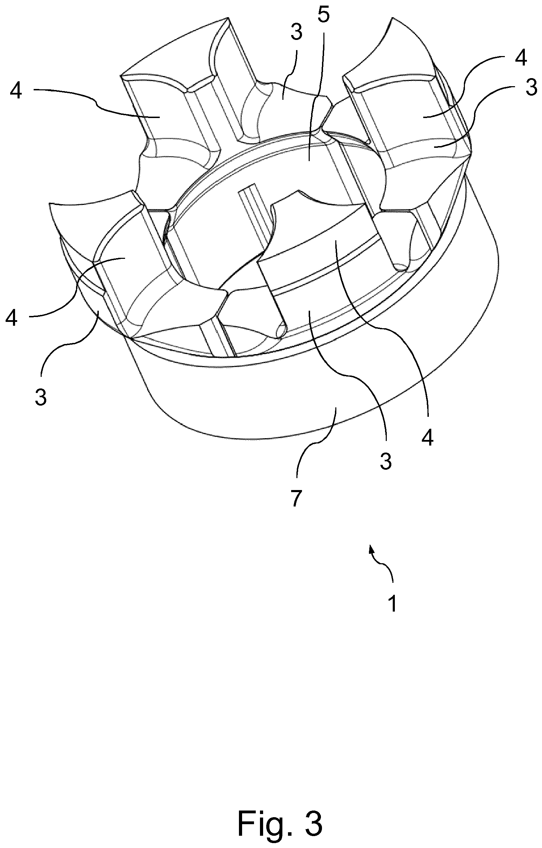

Die Kupplungshälfte 1 ist auch in Figur 3 dargestellt.

Die Kupplungshälfte 1 weist vier Kupplungselemente 3 auf, die am Umfang verteilt kreisförmig angeordnet sind.

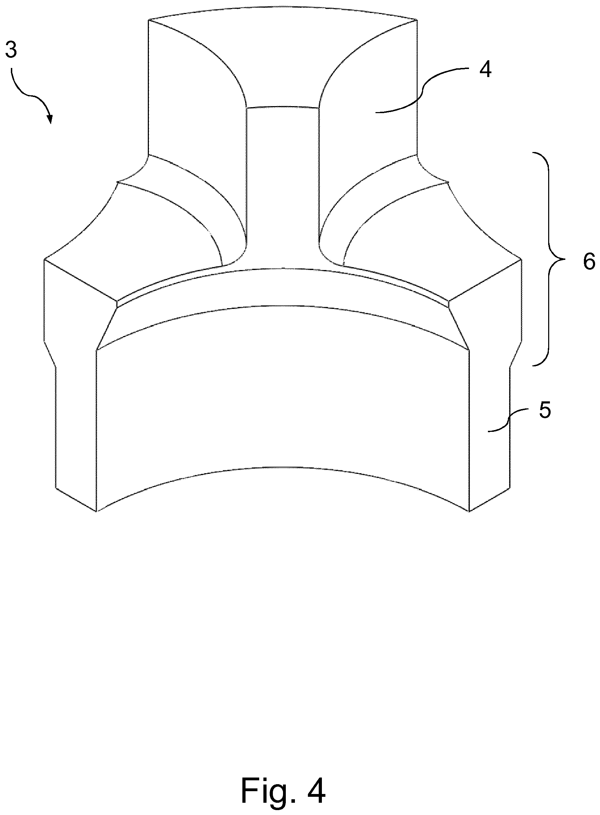

Ein einzelnes Kupplungselement ist in Figur 4 gezeigt und weist einen Klauenbereich 4, einen Wellenbereich 5 sowie einen dazwischen verlaufenden Übergangsbereich 6 auf.

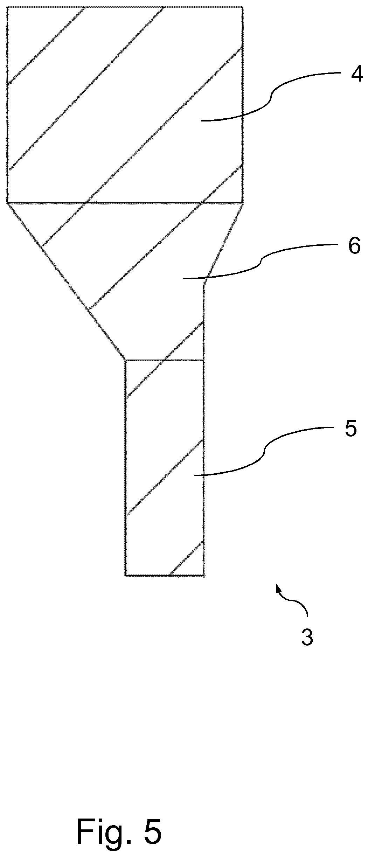

Figur 5 zeigt einen Vertikalschnitt durch das Kupplungselement 3 von Figur 4 mit einer Kennzeichnung der Bereiche.

Aus den Figuren 4 und 5 ist ersichtlich, dass der Klauenbereich 4 eine größere radiale Dicke aufweist als der Wellenbereich 5. Der Übergangsbereich 6 dient dazu, die radiale Dicke vom Klauenbereich 4 auf die geringere radiale Dicke des Wellenbereichs 5 zu reduzieren.

Der Wellenbereich 5 wiederum bildet eine Art Ringabschnitt, indem er sich auf einem Radius über einen bestimmten Winkel erstreckt. In Anbetracht der Vierteilung der Kupplungshälfte 1 und der daraus resultierenden vier Kupplungselemente erstreckt sich der Wellenbereich 5 über einen Ringabschnitt mit einem Winkel von 90°.

Die Aufteilung der Kupplungshälfte 1 in Viertel, von denen jedes ein Kupplungselement 3 bildet, ermöglicht eine einfache und kostengünstige Herstellung der einzelnen Klauen im Pressverfahren.

Die Kupplungselemente 3 sind mit ihren Wellenbereichen 5 in einen Spannring 7 eingesetzt, der die Wellenbereiche 5 vollständig umschließt, wie die Figuren 1 und 3 zeigen.

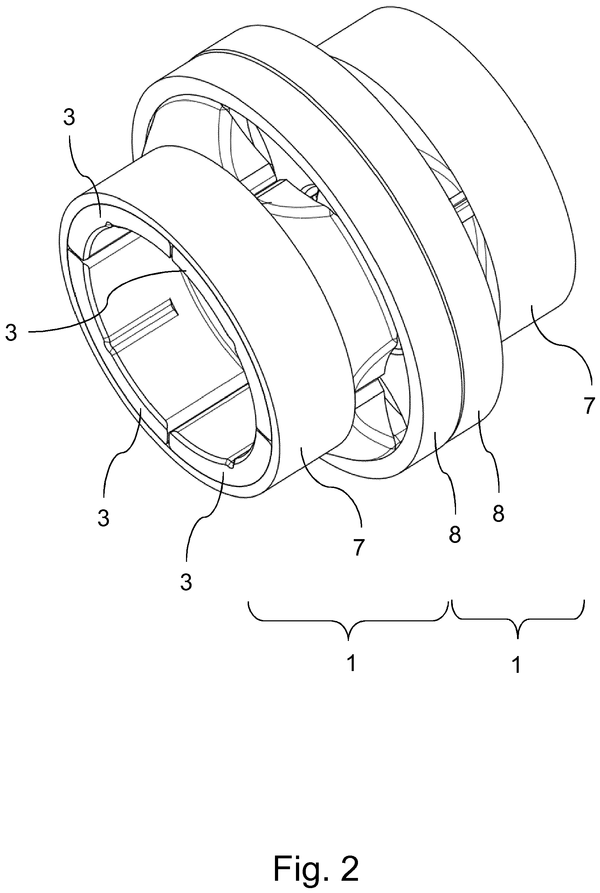

In ähnlicher Weise sind die Klauenbereiche 4 von einem Stützring 8 umschlossen, wie insbesondere in Figur 1 erkennbar. Der Stützring 8 ist axial auf die Klauenbereiche 4 aufgeschoben und überdeckt ca. die Hälfte der Axialerstreckung der Klauenbereiche 4. Ein Teil der Klauenbereiche 4 steht jedoch axial weiter vor, wie in Figur 1 erkennbar. Dadurch wird ein Eingreifen in die gegenüberliegende Kupplungshälfte ermöglicht, wie später noch anhand von Figur 2 erläutert.

Das Wellenelement 2 weist einen Wellenabsatz 9 mit verringertem Durchmesser auf (Figur 1), der jedoch ein gewisses Übermaß im Verhältnis zu dem Innendurchmesser der Wellenbereiche 5 aufweist. Durch Einschieben des Wellenabsatzes 9 aus der in Figur 1 gezeigten Stellung in den von den Wellenbereichen 5 umschlossenen Raum, wird in Zusammenwirken mit dem Spannring 7 ein Längspressverband gebildet.

Figur 2 zeigt zwei Kupplungshälften 1, die miteinander in Eingriff stehen. Die Kupplungshälften 1 sind identisch ausgeführt, jedoch um einen Winkel von 45° zueinander versdreht, so dass die jeweiligen Klauenbereiche ineinander eingreifen können. Zwischen den sich gegenüber stehenden Klauenbereichen 4 sind Elastomerelemente eingelegt (nicht gezeigt).

Wie bereits anhand von Figur 5 dargestellt, ist es zweckmäßig, wenn der Klauenbereich 4 eine erheblich größere radiale Dicke aufweist als der Wellenbereich 5. Da die Kupplungselemente 3 aus FKV hergestellt sind, werden insbesondere Wirrfaser-Halbzeuge oder unidirektional-Prepregs verwendet. Diese werden in dünnen Schichten ausgeliefert, die in geeigneter Weise geschnitten und zusammengelegt werden müssen.

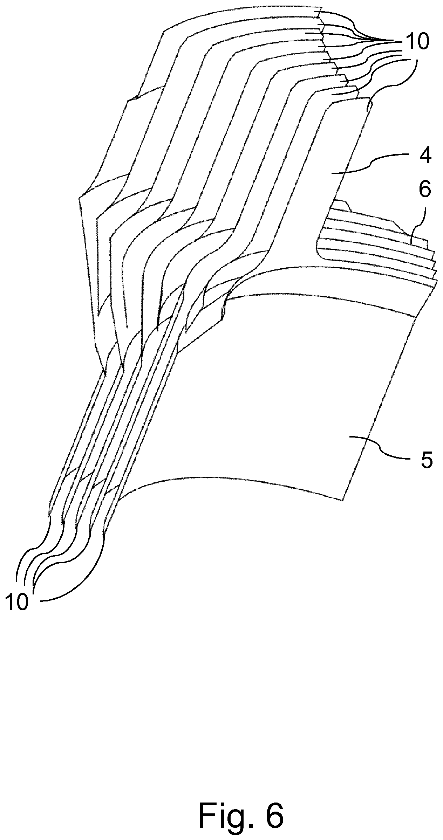

Figur 6 zeigt ein Beispiel für eine bestimmte Anzahl von Schichtlagen aus einem derartigen zugeschnittenen FKV-Halbzeug.

In dem gezeigten Beispiel ist der Wellenbereich 5 aus fünf übereinander liegenden Schichten 10 gebildet, während der Klauenbereich 4 durch neun Schichten 10 unterschiedlichen Zuschnitts gebildet ist. Von den neun Schichten 10 laufen im Übergangsbereich 6 zwischen Klauenbereich 4 und Wellenbereich 5 einige Schichten 10 aus, so dass die radiale Dicke verringert werden kann.

Die Schichten 10 erstrecken sich jeweils in Umfangsrichtung entlang einer gekrümmten Ebene, wobei Bereiche der Schichten 10 auch abgeknickt sein bzw. in einem Winkel zu der jeweiligen gekrümmten Ebene verlaufen können, wie in Figur 6 gezeigt.

Die gezeigten Schichten 10, insbesondere die Schichtanzahl, dienen lediglich der Erläuterung. In der Praxis können auch sehr viel mehr Schichten eingesetzt werden. Insbesondere lässt sich auch der Übergangsbereich 6 anders gestalten.

## Patentansprüche

1. Kupplungshälfte (1), mit mehreren Kupplungselementen (3), wobei
- jeweils ein Kupplungselement (3) einen frei axial vorstehenden Klauenbereich (4) und einen Wellenbereich (5) aufweist;
- die Kupplungselemente (3) am Umfang eines Kreises verteilt angeordnet sind;
**dadurch gekennzeichnet, dass**
- wenigstens eines der Kupplungselemente (3) aus einem Faser-Kunststoff-Verbund besteht;
- das aus dem Faser-Kunststoff-Verbund bestehende Kupplungselement (3) aus mehreren Schichten (10) eines Faser-Halbzeugs gebildet ist; und dass
- die Anzahl der Schichten in dem Wellenbereich (5) geringer ist als die Anzahl der Schichten (10) in dem Klauenbereich (4).

2. Kupplungshälfte nach Anspruch 1, wobei die maximale radiale Dicke des Klauenbereichs (4) eines Kupplungselements (3) größer ist als die maximale radiale Dicke des Wellenbereichs (5).

3. Kupplungshälfte nach einem der vorstehenden Ansprüche, wobei sich der Wellenbereich (5) in Umfangsrichtung über einen größeren Winkel erstreckt als der Klauenbereich (4).

4. Kupplungshälfte nach einem der vorstehenden Ansprüche, wobei sich die Wellenbereiche (5) von zueinander am Umfang benachbarten Kupplungselementen (3) berühren.

5. Kupplungshälfte nach einem der vorstehenden Ansprüche, wobei
- zwischen dem Klauenbereich (4) und dem Wellenbereich (5) ein Übergangsbereich (6) vorgesehen ist;
- in dem Übergangsbereich (6) die radiale Dicke von der radialen Dicke des Klauenbereichs (4) zur radialen Dicke des Wellenbereichs (5) hin abnimmt; und wobei
- die Anzahl der Schichten (10) des Faser-Halbzeugs in dem Übergangsbereich (6) von dem Klauenbereich (4) zu dem Wellenbereich (5) hin abnimmt.

6. Kupplungshälfte nach einem der vorstehenden Ansprüche, wobei die Schichten (10) des Faser-Halbzeugs derart angeordnet sind, dass die Fasern einer Schicht (10) in einem Winkel zu den Fasern einer benachbarten Schicht (10) stehen.

7. Kupplungshälfte nach einem der vorstehenden Ansprüche, wobei die Wellenbereiche (5) der Kupplungselemente (3) wenigstens teilweise von einem Spannring (7) umschlossen sind.

8. Kupplungshälfte nach einem der vorstehenden Ansprüche, wobei die Klauenbereiche (4) der Kupplungselemente (3) wenigstens teilweise von einem Stützring (8) umschlossen sind.

9. Kupplungshälfte nach einem der vorstehenden Ansprüche, wobei
- die Wellenbereiche (5) um ein Wellenelement (2) herum angeordnet sind; und wobei
- die Wellenbereiche (5) mit dem Wellenelement (2) einen Pressverband bilden.

10. Kupplungsvorrichtung, mit zwei einander gegenüberliegend und koaxial zueinander angeordneten Kupplungshälften (1) nach einem der vorstehenden Ansprüche, wobei zwischen jeweils in Umfangsrichtung nebeneinander liegenden Klauenbereichen (3) ein Elastomerelement angeordnet ist.

11. Kupplungsvorrichtung nach Anspruch 10, wobei die Kupplungsvorrichtung eine Klauenkupplung ist.

## Claims

1. A clutch half (1) having a plurality of clutch elements (3), wherein
each clutch element (3) comprises a freely axially protruding dog region (4) and a shaft region (5);
the clutch elements (3) are distributed along a circumference of a circle;
**characterized in that**
at least one of the clutch elements (3) is formed from a fiber plastic composite;
the clutch element (3) formed from the fiber plastic composite is formed from a plurality of layers (10) of a fiber semi-finished product; and that
the number of layers in the shaft region (5) is smaller than the number of layers (10) in the dog region (4).

2. The clutch half according to claim 1, wherein the maximal radial thickness of the dog region (4) of one of the clutch elements (3) is larger than the maximal radial thickness of the shaft region (5).

3. The clutch half according to one of the preceding claims, wherein the shaft region (5) extends in circumferential direction over a larger angle than the dog region (4).

4. The clutch half according to one of the preceding claims, wherein the shaft regions (5) of shaft elements (3) arranged adjacent to each other in circumferential direction contact each other.

5. The clutch half according to one of the preceding claims, wherein
between the dog region (4) and the shaft region (5) an intermediate region (6) is provided;
in the intermediate region (6) the radial thickness decreases from the radial thickness of the dog region (4) to the radial thickness of the shaft region (5); and wherein
the number of layers (10) of the fiber semi-finished product decreases in the intermediate region (6) from the dog region (4) towards the shaft region (5).

6. The clutch half according to one of the preceding claims, wherein the layers (10) of the fiber semi-finished product are arranged such that the fibers of one layer (10) are arranged at an angle with respect to the fibers of the adjacent layer (10).

7. The clutch half according to one of the preceding claims, wherein the shaft regions (5) of the coupling elements (3) are enclosed at least partially by a clamping ring (7).

8. The clutch half according to one of the preceding claims, wherein the dog regions (4) of the coupling elements (3) are enclosed at least partially by a supporting ring (8).

9. The clutch half according to one of the preceding claims, wherein
the shaft regions (5) are arranged around a shaft element (2); and wherein the shaft regions (5) form with the shaft element (2) an interference fit assembly.

10. A clutch device having two clutch halves (1) according to one of the preceding claims that are arranged coaxially aligned and opposite to each other, wherein an elastomer element is provided between dog regions (3) arranged respectively next to each other in circumferential direction.

11. The clutch device according to claim 10, wherein the clutch device is a dog clutch.

## Revendications

1. Moitié d'accouplement (1), avec plusieurs éléments d'accouplement (3), dans laquelle
- respectivement un élément d'accouplement (3) présente une zone à crabots (4) dépassant librement axialement et une zone d'arbre (5) ;
- les éléments d'accouplement (3) sont répartis sur la périphérie d'un cercle ;
**caractérisée en ce que**
- au moins un des éléments d'accouplement (3) est constitué d'un composite de matière plastique et de fibre ;
- l'élément d'accouplement (3) constitué du composite de matière plastique et de fibre est formé de plusieurs couches (10) d'un demi-produit de fibre ; et que
- le nombre de couches dans la zone d'arbre (5) est inférieur au nombre de couches (10) dans la zone à crabots (4).

2. Moitié d'accouplement selon la revendication 1, dans laquelle l'épaisseur radiale maximale de la zone à crabots (4) d'un élément d'accouplement (3) est supérieure à l'épaisseur radiale maximale de la zone d'arbre (5).

3. Moitié d'accouplement selon l'une quelconque des revendications précédentes, dans laquelle la zone d'arbre (5) s'étend dans la direction périphérique sur un angle plus grand que la zone à crabots (4).

4. Moitié d'accouplement selon l'une quelconque des revendications précédentes, dans laquelle les zones d'arbre (5) d'éléments d'accouplement (3) contigus les uns aux autres sur la périphérie se touchent.

5. Moitié d'accouplement selon l'une quelconque des revendications précédentes, dans laquelle
- une zone de transition (6) est prévue entre la zone à crabots (4) et la zone d'arbre (5) ;
- dans la zone de transition (6) l'épaisseur radiale diminue de l'épaisseur radiale de la zone à crabots (4) à l'épaisseur radiale de la zone d'arbre (5) ; et dans laquelle
- le nombre de couches (10) du demi-produit de fibre diminue dans la zone de transition (6) de la zone à crabots (4) à la zone d'arbre (5).

6. Moitié d'accouplement selon l'une quelconque des revendications précédentes, dans laquelle les couches (10) du demi-produit de fibre sont disposées de telle manière que les fibres d'une couche (10) se trouvent dans un angle par rapport aux fibres d'une couche (10) contiguë.

7. Moitié d'accouplement selon l'une quelconque des revendications précédentes, dans laquelle les zones d'arbre (5) des éléments d'accouplement (3) sont entourées au moins partiellement par un anneau de serrage (7).

8. Moitié d'accouplement selon l'une quelconque des revendications précédentes, dans laquelle les zones à crabots (4) des éléments d'accouplement (3) sont entourées au moins partiellement par un anneau d'appui (8).

9. Moitié d'accouplement selon l'une quelconque des revendications précédentes, dans laquelle
- les zones d'arbre (5) sont disposées autour d'un élément d'arbre (2) ; et dans laquelle
- les zones d'arbre (5) forment avec l'élément d'arbre (2) un joint à ajustement serré.

10. Dispositif d'accouplement, avec deux moitiés d'accouplement (1) disposées de manière opposée l'une à l'autre et coaxialement l'une à l'autre selon l'une quelconque des revendications précédentes, dans lequel un élément d'élastomère est disposé entre des zones à crabots (3) se trouvant respectivement dans la direction périphérique les unes à côté des autres.

11. Dispositif d'accouplement selon la revendication 10, dans lequel le dispositif d'accouplement est un accouplement à crabots.
